# EUROPÄISCHE PATENTANMELDUNG

(11) **EP 1 245 416 A2**
(43) Veröffentlichungstag der Anmeldung: **02.10.2002**
(21) Anmeldenummer: 02005824.4
(22) Anmeldetag: 14.03.2002
(51) Int. Cl.: B60G 11/16, B60G 11/52, F16F 3/10, F16F 1/12, F16F 1/44

(54) **Vorrichtung zur Federung und Niveauregulierung für Kraftfahrzeuge**

(30) Priorität: 26.03.2001 DE 10114989
(71) Anmelder: ZF Lemförder Metallwaren AG, 49448 Lemförde (DE)
(72) Erfinder: Ersoy, Metin, Dr., 65396 Walluf (DE)

(57) **Zusammenfassung**

Es wird eine Vorrichtung zur Federung und Niveauregulierung für Kraftfahrzeuge vorgestellt, die mindestens ein zwischen Fahrzeugrad und Karosserie angeordnetes in seiner Federvorspannung durch eine motorisch angetriebene Verstellvorrichtung veränderbares Federelement aufweist. Erfindungsgemäß ist dieses Federelement aus mindestens zwei parallel geschalteten, ineinander geschachtelten Schraubenfedern 1, 2 aufgebaut, wobei die innen liegende Schraubenfeder 2 durch die Verstellvorrichtung 6 in ihrer Federvorspannung variierbar ist, und wobei die Verstellvorrichtung 6 einen elektromotorischen Spindelantrieb 5, 7, 8 aufweist, dessen Verstellspindel 7 innerhalb des zentralen Luftraumes der innen liegenden Schraubenfeder 2 angeordnet ist. Durch diese erfindungsgemäße Gestaltung lässt sich eine Federungs- und Niveauregulierungsvorrichtung schaffen, die für eine Vielzahl von Radaufhängungen an Kraftfahrzeugen ohne zusätzlichen Bauraum nachrüstbar ist, und aufgrund ihrer kostengünstigen und kompakten Bauweise auch für kleinere Kraftfahrzeuge geeignet ist.

## Beschreibung

Die Erfindung betrifft eine Vorrichtung zur Federung und Niveauregulierung für Kraftfahrzeuge mit mindestens einem zwischen Fahrzeugrad und Karosserie angeordneten in seiner Federvorspannung durch eine motorisch angetriebene Verstellvorrichtung veränderbaren Federelement.

An jedem Kraftfahrzeug sind zur Entkoppelung von Vertikalbewegungen der Fahrzeugräder infolge von Fahrbahnunebenheiten gegenüber der Karosserie Federungseinrichtungen vorhanden, welche in unterschiedlicher Ausgestaltung mittels mechanischer, hydraulischer oder pneumatischer Federelemente realisiert werden. Allen derartigen aus dem Stand der Technik bekannten Federsystemen ist gemeinsam, dass infolge der Beladung der Fahrzeugkarosserie der Federweg der Federungsvorrichtungen eingeschränkt wird, was zu einem nicht unerheblichen Komfortverlust für die Fahrzeuginsassen führen kann. Um hier Abhilfe zu schaffen, sind insbesondere bei höherwertigen Federungsvorrichtungen zusätzliche Niveauregulierungssysteme integriert.

Diese basieren üblicherweise darauf, die Federvorspannung der Federelemente im Beladungsfalle zu erhöhen, so dass das zusätzliche Gewicht nicht zu einem Einsinken der Federung im beladenen Zustand führt. Aus der EP 0 444 278 B1 ist z.B. eine Vorrichtung zur Federung und Niveauregulierung bekannt, wobei zwei parallel geschaltete ineinander geschachtelte Federn zwischen Fahrzeugrad und Karosserie angeordnet sind. Die äußere Feder ist als Schraubenfeder ausgebildet, in welcher die innere Feder über ein hydraulisches Stellglied in ihrer Vorspannung variierbar ist. Die innere Feder kann dabei als Luftfeder oder als Stahlfeder ausgebildet sein.

Eine andere Art der Niveauregulierung besteht darin, Stoßdämpfer einzusetzen, bei denen die zugehörige Hydraulik im Zusammenspiel mit der Federung selbstpumpend den Druck erhöht.

Abgesehen von der Tatsache, dass eine zusätzliche Niveauregulierung am Fahrzeug die Herstellungskosten erhöht, besitzen die aus dem Stand der Technik bekannten Lösungen den Nachteil, dass entweder wie bei Luftfederungen beispielsweise eine zusätzliche Luftpumpe, Druckspeicherventile und Leitungen notwendig sind, was einen Gewichtsnachteil und einen zusätzlichen Bedarf an Einbauvolumen mit sich bringt. Die letztgenannte mit Hilfe der Stoßdämpferhydraulik realisierte Niveauregulierung besitzt dem gegenüber den Nachteil, dass insbesondere nach langen Stillstandszeiten infolge der inneren Leckage des Stoßdämpfers eine nicht unbedeutende Zeit vergeht, bis infolge des Zusammenspiels zwischen Federung und Stoßdämpfer eine Anhebung der Fahrzeugkarosserie herbeigeführt ist. Der Anhebevorgang kann in ungünstigen Fällen eine Zeitspanne dauern, in der das Fahrzeug mehrere hundert Meter Fahrweg zurückgelegt hat, was insbesondere bei hoher Zuladung oder bei unebenen Wegen (z.B. Garagenausfahrt) nicht akzeptabel erscheint.

Aufgabe der vorliegenden Erfindung ist es daher, eine Vorrichtung zu entwickeln, die eine Federung und Niveauregulierung mit einfachen und kostengünstigen Mitteln realisierbar macht und gleichzeitig bezüglich des Bedarfes an Einbauraum geringe Ansprüche stellt.

Diese Aufgabe wird erfindungsgemäß durch eine Vorrichtung zur Federung und Niveauregulierung für Kraftfahrzeuge mit den Merkmalen nach dem Patentanspruch 1 gelöst. Bevorzugte Weiterbildungen sind in den Unteransprüchen beschrieben.

Gemäß der Lehre nach dem Patentanspruch 1 weist das Federelement mindestens zwei parallel geschaltete, ineinander geschachtelte Schraubenfedern auf, wobei die innen liegende Schraubenfeder durch die Verstellvorrichtung in ihrer Federvorspannung variierbar ist, und wobei die Verstellvorrichtung einen elektromotorischen Spindelantrieb aufweist, dessen Verstellspindel innerhalb des zentralen Luftraumes der innen liegenden Schraubenfeder angeordnet ist.

Die geschilderte erfindungsgemäße Gestaltung ermöglicht die Realisierung einer Vorrichtung zur Federung und Niveauregulierung, die insbesondere bei Federsystemanordnungen, bei denen das Federelement und der zugeordnete Stoßdämpfer nicht ineinander angeordnet sind, keinerlei zusätzlichen Bauraum benötigt. Die weit verbreitete Verwendung von Schraubenfedern, deren innen liegender Luftraum ungenutzt ist, bietet darüber hinaus die Möglichkeit, die erfindungsgemäße Vorrichtung bei bestehenden Federsystemkonstruktionen problemlos nachzurüsten. Die ursprünglich vorhandene einzelne Schraubenfeder wird hierbei in ihrer Federrate beispielsweise auf 2/3 ihrer ursprünglichen Federungsfähigkeit reduziert, indem bei gleichen Ursprungsabmaßen die Schraubenfeder einen kleineren Drahtdurchmesser erhält. Ferner kann die Bauhöhe der Schraubenfeder reduziert werden, um z.B. zusätzlichen Platz für den elektromotorischen Spindelantrieb zu schaffen. Der unbenutzte Luftraum innerhalb der Schraubenfeder wird mit der Verstellvorrichtung und der zusätzlichen zweiten Schraubenfeder genutzt, die das verbleibende Drittel der ursprünglichen Federrate bereitstellt. Diese zusätzliche Schraubenfeder hat aufgrund der notwendigen Bereitstellung eine geringere Federrate, eine kürzere Einbau- und Blocklänge, so dass der gesamte Spindelantrieb ggf. innerhalb des Luftraumes der inneren Schraubenfeder angeordnet werden kann.

Die erfindungsgemäße Vorrichtung hat gegenüber den verbreiteten Luftfederungssystemen den Vorteil, ohne zusätzliche Nebenaggregate auszukommen und ist insbesondere aufgrund des kostengünstigen elektrischen Spindelantriebes auch bei kleineren, preiswerteren Fahrzeugen einsetzbar. Bei diesen Fahrzeugen bieten sich durch den Mangel an zusätzlich benötigtem Einbauraum als auch durch das geringe Zusatzgewicht der erfindungsgemäßen Vorrichtung weitere Einsatzvorteile. Bei der Verwendung einer Vorrichtung zur Federung und Niveauregulierung ist darüber hinaus zu berücksichtigen dass durch den Niveauausgleich bei beladenem Fahrzeug der Federweg unter allen Einsatzbedingungen gleich bleibt, so dass der unter Belastung notwendige Federweg ohne Komforteinbußen um 20 bis 30 mm reduziert werden kann.

Die innen liegende Schraubenfeder kann über ihre Länge einen konstanten Durchmesser aufweisen. Bevorzugt ist die innen liegende Schraubenfeder aber als Formfeder ausgebildet, die durch die Verstellvorrichtung zusätzlich in ihrer Federrate variierbar ist.

Die Formfeder kann als Kegelstumpffeder, Doppelkegelstumpffeder oder als Trichterfeder ausgebildet sein. Es hat sich aber insbesondere als vorteilhaft erwiesen, die innen liegende Schraubenfeder als Tonnenfeder auszubilden, wodurch eine progressive Federrate verwirklicht werden kann. Dies ist insbesondere im Hinblick auf die Beibehaltung der Fahrzeugeigenfrequenz von Bedeutung und wird in dieser Form - beispielsweise bei aufwendig gestalteten Luftfederungen - verwirklicht. Darüber hinaus hat es sich als zweckmäßig erwiesen, innerhalb des zentralen Luftraumes der innen liegenden Schraubenfeder eine Zusatzfeder aus Kunststoff, vorzugsweise aus Polyurethan, anzuordnen. Die gesamte erfindungsgemäße Vorrichtung lässt sich bezüglich ihres Einbauraumes zusätzlich dadurch optimieren, dass die Spindelmutter des elektromotorischen Spindelantriebes in die karosserieseitige Aufnahme der innen liegenden Schraubenfeder integriert ist. Zusätzliche Vorteile der erfindungsgemäßen Vorrichtung können durch die Tatsache herbeigeführt werden, dass ein zur Verstellung der Feder vorhandener Höhensensor zusätzlich zur Leuchtweitenregulierung oder zur Messung der Nickbewegungen der Karosserie beim Bremsen und Beschleunigen genutzt wird. Die gemessenen Daten können dann der Verstellvorrichtung zugefährt werden, die durch Erhöhung oder Erniedrigung der Federrate ein Absenken oder Anheben beispielsweise der Hinterachse des betreffenden Kraftfahrzeuges herbeiführt. Darüber hinaus lässt sich durch Verwendung der erfindungsgemäßen Vorrichtung auch ein Absenken der Karosserie und somit eine Reduzierung des Luftwiderstandes bei höheren Geschwindigkeiten realisieren.

Die vom Fahrzeugaufbau auf die Spindel übertragenen Axialkräfte können über einen in dem elektromotorischen Spindelantrieb vorgesehenen Elektromotor auf die Spindel übertragen werden. Bevorzugt werden die Axialkräfte aber über ein am Fahrzeugaufbau befestigtes Axial-Festlager übertragen, von welchem die Spindel in axialer Richtung fest gegen den Fahrzeugaufbau gelagert ist. Dadurch kann der Elektromotor weniger stabil und somit auch kostengünstiger ausgelegt sein.

Im Folgenden wird ein Ausführungsbeispiel des Gegenstandes der Erfindung anhand der beigefügten Figuren näher erläutert. Es zeigt:
- Figur 1: die erfindungsgemäße Vorrichtung in unbeladenem Zustand der Karosserie und
- Figur 2:: das Ausführungsbeispiel der Figur 1 bei voller Zuladung des Kraftfahrzeuges.

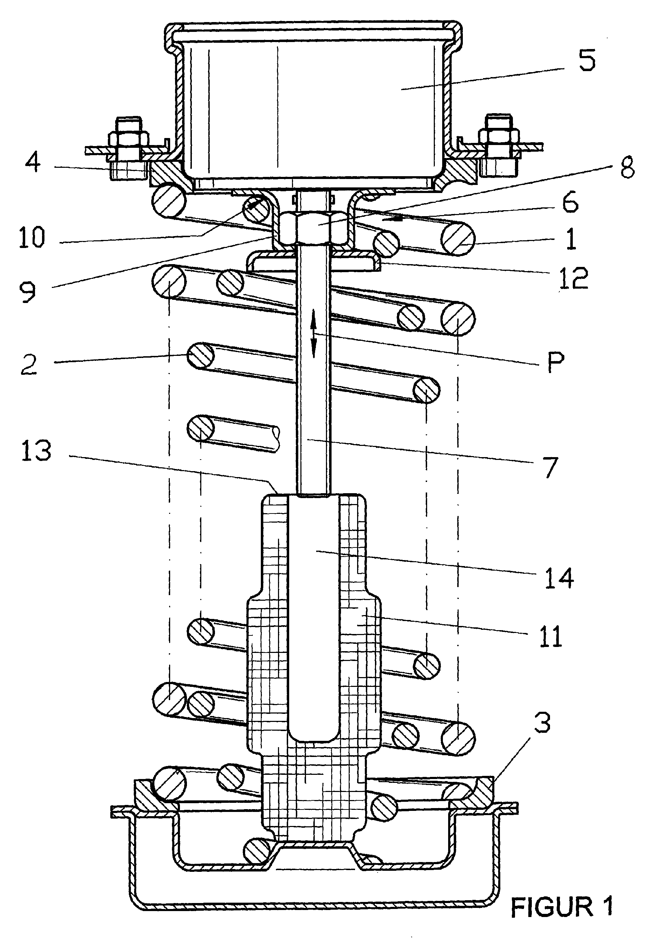

Wie der Figur 1 zu entnehmen ist, weist die erfindungsgemäße Vorrichtung eine äußere Schraubenfeder 1 auf, welche zwischen einer radseitigen Aufnahme 3 und einer karosserieseitigen Aufnahme 4 angeordnet ist. Im inneren Luftraum der zylinderförmigen Schraubenfeder 1 ist eine zweite Schraubenfeder 2 angeordnet, die als so genannte Tonnenfeder gestaltet ist. Die äußere Schraubenfeder 1 bringt aufgrund ihres größeren Wirkdurchmessers und des größeren Drahtdurchmessers ungefähr 2/3 der gesamten durch die Parallelschaltung der beiden Schraubenfedern 1 und 2 möglichen Federrate auf. Dabei ist die äußere Schraubenfeder 1 derart ausgelegt, dass sie das Fahrzeug im leeren Zustand mit einem ausreichenden Federweg abstützen könnte, wenn die innere Schraubenfeder 2 nicht vorhanden wäre. Im Bereich der karosserieseitigen Aufnahme 4 befindet sich unmittelbar oberhalb des oberen freien Endes der Schraubenfedern 1 und 2 der Elektromotor 5 einer in ihrer Gesamtheit mit 6 bezeichneten Verstellvorrichtung. Die Verstellvorrichtung 6 ist als Spindelantrieb gestaltet, wobei der Elektromotor 5 eine in Richtung der radseitigen Aufnahme 3 der Schraubenfedern 1 und 2 weisende Verstellspindel 7 mit darauf angeordneter Spindelmutter 8 aufweist. Die Verstellspindel 7 ist als in axialer Längsrichtung feststehende Ausführung gestaltet, so dass eine Drehung der Verstellspindel 7 durch den Elektromotor 5 eine Bewegung der Spindelmutter 8 in Axiallängsrichtung entsprechend des Pfeiles P bewirkt. Die Spindelmutter 8 ist in einem topfförmigen Gehäuse 9 aufgenommen, dessen in Richtung des Elektromotors weisendes oberes Ende zu den Außenseiten im Winkel von 90 Grad umgebogen ist, so dass sich eine Anlagefläche 10 für das obere Ende der Schraubenfeder 2 ergibt. Bei einer Drehung der Verstellspindel 7 und einer daraus resultierenden axialen Bewegung des Gehäuses 9 in Richtung der radseitigen Aufnahme 3 wird die von der Anlagefläche 10 an ihrem oberen freien Ende gehaltene Schraubenfeder 2 zusammengedrückt. Ein Zusammendrücken der Schraubenfeder 2 bewirkt aufgrund der Verringerung des möglichen Federweges eine Versteifung der Schraubenfeder 2, und somit aufgrund der Parallelanordnung der Schraubenfedern 1 und 2 eine Versteifung des Gesamtfedersystems.

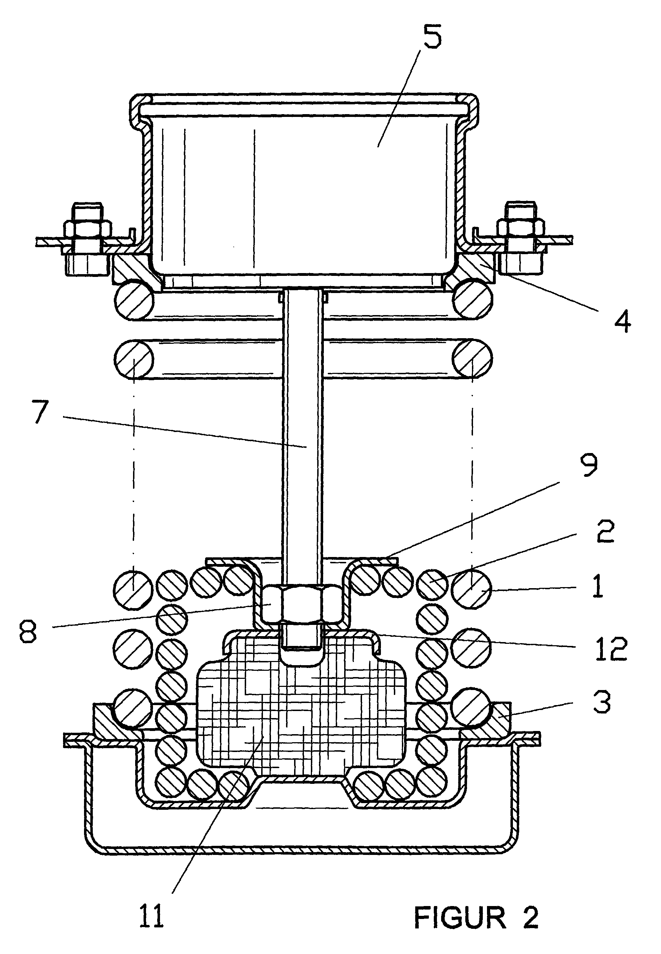

Bei maximaler Belastung der Karosserie wird die Spindelmutter in axialer Richtung bis ans untere freie Ende der Verstellspindel 7 bewegt. Das daraus resultierende Zusammenpressen der inneren Schraubenfeder 2 ist durch die Schnittdarstellung der Figur 2 verdeutlicht.

Den Figuren 1 und 2 ist darüber hinaus zu entnehmen, dass an der radseitigen Aufnahme 3 im Bereich des inneren Luftraumes der Schraubenfeder 2 eine Zusatzfeder 11 angeordnet ist. Diese Zusatzfeder besteht vorzugsweise aus Polyurethan und besitzt an ihrem oberen, der karosserieseitigen Aufnahme 4 zugewandten Seite eine Ausnehmung 14, vorzugsweise in Form einer Bohrung. Diese Ausnehmung dient dazu, die Verstellspindel 7 für den Fall aufzunehmen, bei dem die Karosserie durch zusätzliche Beladung belastet ist, die Spindelmutter 8 sich jedoch noch im oberen, dem Elektromotor 5 zugewandten Bereich der Verstellspindel 7 befindet.

Den Figuren ist darüber hinaus zu entnehmen, dass sich an der unteren dem Elektromotor 5 abgewandten Seite des Gehäuses 9 eine im Wesentlichen im Querschnitt U-förmige Druckplatte 12 befindet. Diese Druckplatte 12 presst beim Herabgleiten des Gehäuses 9 infolge der Drehung der Spindelmutter 8 auf das obere freie Ende 13 der Zusatzfeder 11 und führt, wie dies insbesondere der Figur 2 zu entnehmen ist, zu einer entsprechenden Verformung.

Der Vorgang der Niveauregulierung mit Hilfe der erfindungsgemäßen Vorrichtung gliedert sich in zwei wesentliche Verfahrensschritte. Bei einer Belastung der Karosserie in Folge einer Zuladung wird sich das in der Figur 1 abgebildete unbelastete Federsystem zunächst absenken, da die Schraubenfedern 1 und 2 in Folge der Zuladung zusammengepresst werden. Die Verstellspindel 7 taucht hierbei in die Ausnehmung 14 der Zusatzfeder 11 ein. In den Zeichnungen nicht näher dargestellte Sensoren an der Karosserie registrieren ein Absinken derselben und übermitteln diesen Zustand über eine geeignete elektronische Steuerung an den Elektromotor 5 der Verstellvorrichtung 6. Die Drehung des angesteuerten Elektromotors und somit die Spindeldrehung führt zu einem Herabwandern der Spindelmutter 8 hin zum freien Ende der Verstellspindel 7. Diese Bewegung führt zu einem zusätzlichen Zusammenpressen der Schraubenfeder 2 und somit zu einer Versteifung des aus den Schraubenfedern 1 und 2 bestehenden Gesamtfedersystems. Die Versteifung des Gesamtfedersystems wiederum führt zu einer Anhebung der Karosserie bis auf ein konstruktionsseitig vorbestimmtes und durch die Auslegung der Federn bestimmtes Niveau, bei dem ein bei voller Zuladung ausreichender Federweg gewährleistet ist. Der Elektromotor für die Auf- und Abwärtsbewegung der Spindelmutter 8 in Verbindung mit einer entsprechenden Steigung der Verstellspindel 7 führt bezüglich der Schnelligkeit beispielsweise zu einer Verstellzeit von 5 Sekunden für eine Anhebung der Karosserie im Bereich von 40 bis 50 mm. Diese Werte zeigen, dass geringere Karosseriebewegungen in sehr kurzer Zeit ausgeglichen werden können. Dies ist insbesondere dann von Vorteil, falls durch eine geeignete elektronische Steuerung Karosseriebewegungen beim Bremsen oder Beschleunigen aktiv herabgesetzt werden sollen.

### Bezugszeichenliste

- 1.: Schraubenfeder
- 2.: Schraubenfeder
- 3.: radseitige Aufnahme
- 4.: karosserieseitige Aufnahme
- 5.: Elektromotor
- 6.: Verstellvorrichtung
- 7.: Verstellspindel
- 8.: Spindelmutter
- 9.: Gehäuse
- 10.: Anlagefläche
- 11.: Zusatzfeder
- 12.: Druckplatte
- 13.: freies Ende
- 14.: Ausnehmung

## Patentansprüche

1. Vorrichtung zur Federung und Niveauregulierung für Kraftfahrzeuge mit mindestens einem zwischen dem jeweiligen Fahrzeugrad und der Karosserie angeordneten in seiner Federvorspannung durch eine motorisch angetriebene Verstellvorrichtung veränderbaren Federelement, wobei das Federelement aus mindestens zwei parallel geschalteten, ineinander geschachtelten Schraubenfedern (1, 2) besteht, die innen liegende Schraubenfeder (2) durch die Verstellvorrichtung (6) in ihrer Federvorspannung variierbar ist, und die Verstellvorrichtung (6) einen elektromotorischen Spindelantrieb (5, 7, 8) aufweist, dessen Verstellspindel (7) innerhalb des zentralen Luftraumes der innen liegenden Schraubenfeder (2) angeordnet ist.

2. Vorrichtung nach Anspruch 1, **dadurch gekennzeichnet, dass** die innen liegende Schraubenfeder (2) als Formfeder ausgebildet und durch die Verstellvorrichtung (6) zusätzlich in ihrer Federrate variierbar ist

3. Vorrichtung nach Anspruch 2, **dadurch gekennzeichnet, dass** die innen liegende Schraubenfeder (2) als Tonnenfeder ausgebildet ist.

4. Vorrichtung nach einem der Ansprüche 1 bis 3, **dadurch gekennzeichnet, dass** innerhalb des zentralen Luftraumes der innen liegenden Schraubenfeder (2) eine Zusatzfeder (11) aus Kunststoff angeordnet ist.

5. Vorrichtung nach einem der Ansprüche 1 bis 4, **dadurch gekennzeichnet, dass** die Spindelmutter (8) des elektromotorischen Spindelantriebes (5, 7, 8) in die karosserieseitige Aufnahme (4) der innen liegenden Schraubenfeder (2) integriert ist.
